# FASCICULE DE BREVET EUROPEEN

(11) **EP 0 611 251 B1**
(45) Date de publication et mention de la délivrance du brevet: **13.08.1997**
(21) Numéro de dépôt: 94810049.0
(22) Date de dépôt: 28.01.1994
(51) Int. Cl.: B29C 47/82, F28F 1/20

(54) **Procédé et dispositf de refroidissement du cylindre d'une extrudeuse**
Kühlungsverfahren und -vorrichtung für ein Extrudergehäuse
Process and apparatus for cooling extruder barrel

(30) Priorité: 04.02.1993 CH 340/93
(43) Date de publication de la demande: 17.08.1994
(73) Titulaire: Nokia-Maillefer S.A., 1024 Ecublens Canton de Vaud (CH)
(72) Inventeur: Denisart, Jean-Paul, CH-1093 La Conversion (CH); Thevoz, Eric, CH-1066 Epalinges (CH); Affolter, Eric, CH-1110 Morges (CH)
(74) Mandataire: Fischer, Franz Josef

(56) Documents cités:
- EP-A- 0 122 886
- EP-A- 0 242 340
- EP-A- 0 248 769
- EP-A- 0 318 667
- WO-A-87/02617
- DE-A- 4 103 221

## Description

La présente invention concerne un procédé de refroidissement par air du cylindre d'une extrudeuse ainsi que le dispositif permettant la mise en oeuvre de ce procédé.

Pour pouvoir être travaillée par une extrudeuse, la matière plastique, généralement sous forme de granulés et en provenance d'une trémie, est introduite à une extrémité d'un cylindre d'extrudeuse puis est conduite tout au long du cylindre au moyen d'une vis d'extrusion afin de ressortir sous forme pâteuse à travers une filière montée à l'autre extrémité du cylindre. La matière plastique passe donc d'un état solide à un état pâteux sur une distance déterminée, cette transformation de matière impliquant de forts échanges thermiques. Afin d'avoir une transformation complète de la matière, celle-ci doit atteindre une température déterminée avant de passer par la filière; pour ceci la température du cylindre entourant la vis doit être exactement contrôlée, cette température dépendant essentiellement du type de plastique en cours d'extrusion, respectivement du type de vis utilisée. Pour maintenir le cylindre à cette température déterminée, des corps de chauffe ainsi que des dispositifs de refroidissement sont disposés le long du cylindre. Généralement celui-ci est divisé en plusieurs zones de chauffage/refroidissement indépendantes successives, ce qui permet d'obtenir un profil de température le long du cylindre. Avant le démarrage de la machine, il est nécessaire de chauffer le cylindre par l'intermédiaire des corps de chauffe afin de l'amener à sa température de réglage, alors que par la suite, le malaxage et la striction mécanique imposée au plastique par la vis apportent au système une quantité de chaleur qui peut être suffisante, voire en excès de celle nécessaire à maintenir le système à la température de réglage. Il peut donc être nécessaire d'ajouter un système de refroidissement au cylindre afin qu'en combinant des cycles de chauffage et de refroidissement, le cylindre, respectivement le plastique reste à une température environ constante sur une zone déterminée du cylindre.

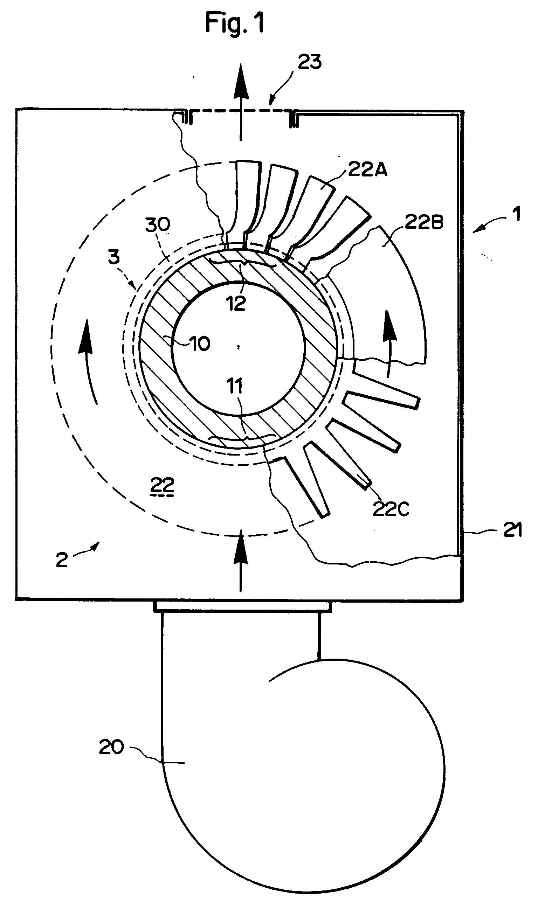

Différents procédés et systèmes de refroidissement ont été proposés. Tout d'abord ceux utilisant un liquide de refroidissement, comme de l'eau ou de l'huile; l'inconvénient majeur de ces systèmes réside dans la complexité du circuit de refroidissement ainsi que l'usinage particulier du cylindre de l'extrudeuse afin d'y faire passer les canalisations de refroidissement. D'autres systèmes ont été proposés, utilisant un flux d'air comme agent de refroidissement. L'avantage par rapport aux systèmes à liquide de refroidissement réside dans la simplicité du circuit ainsi que dans celle du cylindre. Un tel système de refroidissement par circulation d'air selon l'art antérieur est représenté à la figure 1. Cette figure est une coupe transversale à travers le cylindre 10 d'une extrudeuse 1. Le cylindre 10 comprend un espace intérieur cylindrique creux dans lequel tourne la vis (non représentée). Le circuit de refroidissement 2 est composé tout d'abord d'une amenée d'air frais, représentée ici par un ventilateur 20 soufflant de l'air prélevé généralement à l'air ambiant ou à une source d'air frais, à l'intérieur d'une enceinte 21 qui entoure complètement et sur toute sa longueur, la zone de chauffage/refroidissement considérée du cylindre 10. Plusieurs systèmes tels que celui représenté ici sont généralement installés, les uns à la suite des autres sur la longueur du cylindre 10, chacun d'entre eux constituant une zone de chauffage/refroidissement. Des moyens d'échange thermique 22 entourent le cylindre 10, différentes formes d'exécution, comme des languettes de cuivre 22A, des disques 22B ou des picots 22C étant représentés sur la figure. Ces moyens d'échange thermique 22 sont associés au circuit de chauffage 3 dont les manchettes de chauffage 30 sont seulement schématisées sur la figure. Comme on le voit sur la figure, la circulation d'air de refroidissement se fait selon un mouvement ascendant, en provenance du ventilateur 20, circulant de part et d'autre du cylindre 10 en passant par les moyens d'échange thermique 22 et s'échappant par une grille 23 ou des ouvertures aménagées sur le sommet de l'enceinte 21, comme schématisé par les flèches sur la figure. De par le mouvement ascendant de l'air de refroidissement, dû en particulier à l'effet de cheminée, le cylindre 10 n'est pas refroidi de manière homogène; en effet l'air en contact avec la partie inférieure du cylindre 10, représentée par la région 11 est encore frais alors qu'il s'échauffe en passant sur les côtés du cylindre 10 pour atteindre une température maximum vers la partie supérieure du cylindre 10, respectivement la partie représentée en 12. Vu que l'air est plus chaud au sommet du cylindre 10, la partie 12 est refroidie avec moins d'efficacité que la partie 11, ce qui amène à une déformation du cylindre 10, l'allongement de la partie supérieure 12 du cylindre 10 étant supérieur à celui de la partie inférieure 11. Vu la courbure longitudinale que prend le cylindre 10, celui-ci n'est plus exactement coaxial à la vis, le léger jeu existant entre la vis et la surface intérieure du cylindre est modifié de manière non désirée, ce qui amène à une usure prématurée de la vis et du cylindre ainsi qu'à un travail irrégulier du plastique en cours de malaxage.

Un autre dispositif de refroidissement est décrit dans la demande EP-A-0 242 340 qui correspond au brevet US-A-4 763 722. Comme dans le dispositif décrit plus haut, l'air circule selon une direction perpendiculaire à l'axe du cylindre de l'extrudeuse et, bien que dans ce cas l'air soit renvoyé pour un deuxième passage selon un sens opposé, le mouvement d'air reste toujours perpendiculaire à l'axe du cylindre, amenant à un refroidissement inégal de la partie supérieure et de la partie inférieure du cylindre.

Un premier but de l'invention est donc de proposer un procédé de refroidissement du cylindre d'une extrudeuse évitant les inconvénients mentionnés précédemment, c'est-à-dire permettant d'obtenir un refroidissement uniforme du cylindre sur sa section transversale.

Un autre but de l'invention est de proposer un dispositif de refroidissement du cylindre d'une extrudeuse adapté pour l'application du procédé précédent.

Encore un autre but de l'invention est de proposer un dispositif pouvant facilement être installé sur une extrudeuse existante ou pouvant être monté d'origine sur une nouvelle machine.

Afin d'atteindre ces buts, l'invention est définie par le procédé décrit dans la partie caractérisante des revendications 1 à 4, alors que le dispositif répond aux caractéristiques des revendications 5 à 11.

L'invention est plus explicitement décrite dans la description ci-dessous, en regard du dessin annexé comportant les figures où:
la figure 1 représente une coupe transversale d'un cylindre d'extrudeuse équipée d'un dispositif de refroidissement selon l'art antérieur,
la figure 2 représente une coupe longitudinale d'une partie d'un cylindre d'extrudeuse équipé d'une zone de chauffage/refroidissement, le dispositif de refroidissement correspondant à une première forme d'exécution de l'invention,
la figure 3 est une coupe semblable à la précédente, le dispositif de refroidissement correspondant à une autre forme d'exécution de l'invention,
la figure 4 est une vue en perspective d'une portion d'une zone de chauffage/refroidissement munie de lames de refroidissement selon l'invention,
la figures 5A est une vue en perspective d'une lame de refroidissement montée sur un collier de chauffage, alors que
la figure 5B est une vue de profil d'une même lame.

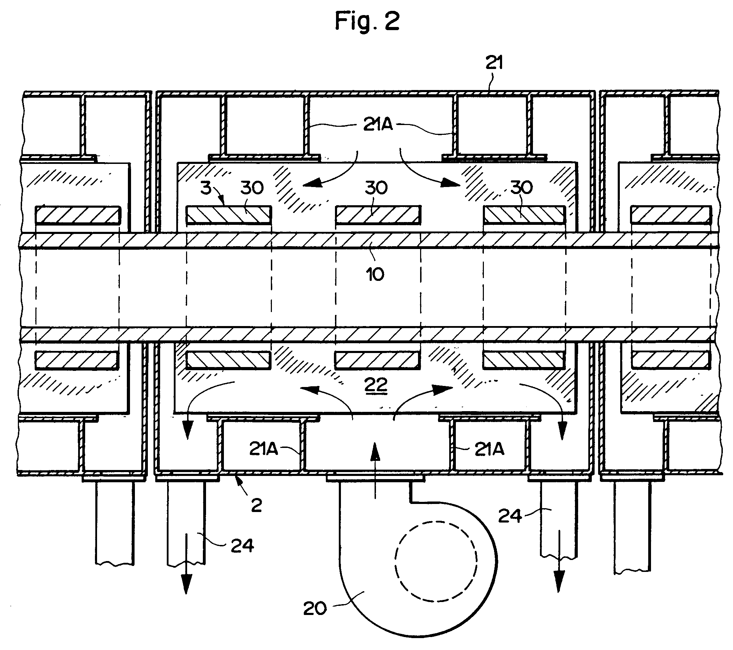

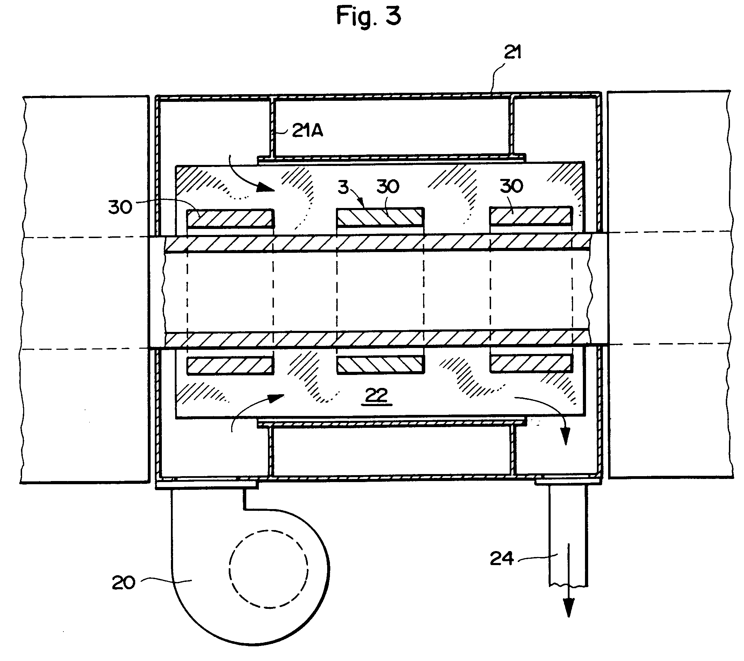

A la figure 2 on a une vue en coupe longitudinale d'une portion du cylindre 10 d'une extrudeuse montrant une zone de chauffage/refroidissement et l'amorce des deux zones voisines. La vis qui est installée à l'intérieur du cylindre 10 n'est pas représentée. Le circuit de refroidissement 2 de la zone de chauffage/refroidissement en question comprend lui aussi un ventilateur 20 qui alimente en air la surface extérieure du cylindre 10 enveloppée dans une enceinte 21. Contrairement au système de la figure 1, et selon l'invention, le circuit d'air est aménagé ici de manière à ce que l'air, après avoir été réparti sur le pourtour du cylindre 10, s'écoule substantiellement longitudinalement le long de la portion de cylindre. Pour ceci, des chicanes 21A guident le flux d'air en provenance du ventilateur 20 afin de le répartir et de l'amener à s'écouler longitudinalement dans les moyens d'échange thermique ou de refroidissement 22 représentés schématiquement sur cette figure. Ceux-ci peuvent être du même type que décrit précédemment en regard de la figure 1 ou alors peuvent être spécialement conçus pour une circulation d'air longitudinale comme on le verra plus loin. Comme précédemment, un circuit de chauffage 3, pouvant être composé de manchettes 30, vient compléter le dispositif. Afin d'éviter l'effet de cheminée, l'air chaud est extrait de l'enceinte 21 par une ou plusieurs ouvertures 24 disposées de préférence vers le bas de ladite enceinte. Ainsi, l'air s'écoulant longitudinalement le long de la zone de chauffage/refroidissement, provoque un refroidissement uniforme de la section transversale du cylindre 10, la portion supérieure de celui-ci étant refroidie de la même manière que sa portion inférieure. Dans la forme d'exécution représentée sur la figure 2, l'air frais en provenance du ventilateur 20 est amené en une position approximativement centrale de la section chauffage/refroidissement et est éliminé aux deux extrémités, alors que dans la forme d'exécution de la figure 3, l'air frais est amené depuis une extrémité de la section pour être éliminé à l'autre extrémité.

Les moyens d'amenée d'air frais ont été représentés ici sous la forme d'un ventilateur 20 propre à la zone en question; il est évident qu'un ventilateur peut alimenter plusieurs zones de chauffage/refroidissement, de même que les moyens d'amenée d'air peuvent être constitués par une canalisation d'air frais alimentant plusieurs machines ou toute ou partie d'une usine.

Comme on l'a dit précédemment, les moyens de refroidissement 22, représentés à la figure 1, respectivement les languettes 22A, les picots 22C ou d'autres encore non représentés, à l'exclusion des disques 22B qui sont trop expressément prévus pour un procédé de refroidissement selon l'art antérieur, peuvent être utilisés avec ce nouveau procédé de refroidissement longitudinal selon l'invention, bien que leur fonctionnement ne soit pas optimum.

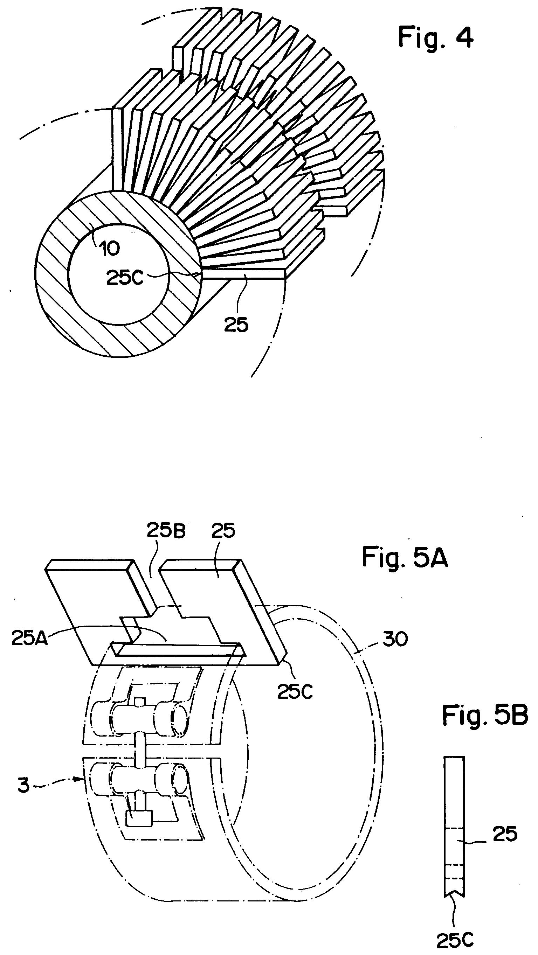

Afin d'augmenter l'efficacité de refroidissement du système, des lames de refroidissement 25, peuvent être disposées autour du cylindre 10, comme on le voit à la figure 4. Cette figure ne montre des lames 25 que sur une portion du pourtour du cylindre 10, mais il est bien entendu qu'en pratique les lames sont disposées sur tout le pourtour du cylindre. Les lames de refroidissement 25 sont de préférence constituées comme on le voit aux figures 5A et 5B. Chaque lame 25 a la forme générale d'un parallélipipède rectangle d'épaisseur relativement faible, de l'ordre de quelques mm alors que sa hauteur peut être de quelques dizaines de mm et sa longueur environ le double de sa hauteur, ces dimensions et rapports n'étant donnés qu'à titre indicatif. Elles sont constituées en un matériau bon conducteur de la chaleur, par exemple en cuivre ou en aluminium. Comme on le voit à la figure 5A, la lame 25 comprend une ouverture 25A et une large fente centrale 25B, toutes deux destinées a recevoir et permettre de fixer une manchette ou un collier de chauffage de technique connue. La face inférieure 25C de la lame 25, qui sera en contact avec la surface extérieure du cylindre 10 et assurera donc l'échange thermique avec celui-ci, peut être soit plane ou alors taillée de manière concave, comme représenté à la figure 5B, de manière à améliorer l'échange thermique ainsi que l'alignement de la lame 25 sur une génératrice du cylindre 10. Comme on le voit à la figure 4, la disposition côte-à-côte des lames 25, chacune d'entre elles étant en contact par sa surface inférieure 25C avec le cylindre 10, crée une sorte d'éventail, laissant libre des canaux longitudinaux permettant une circulation longitudinale de l'air de refroidissement. Afin de simplifier la figure 4, les manchettes de chauffage n'ont pas été représentées. La figure 4 montre un seul éventail de lames de refroidissement 25; dans une zone de chauffage/refroidissement, ou peut avoir plusieurs éventails de lames disposés les uns à la suite des autres.

La fabrication des lames de refroidissement 25 est très simple puisque elles peuvent être obtenues par étampage d'une bande de matériau afin de les découper aux dimensions requises et de confectionner l'ouverture 25A ainsi que la fente 25B et d'un éventuel usinage de la face de contact 25C. De préférence les lames 25 seront toutes de mêmes dimensions, le nombre de lames disposées autour d'un cylindre donné dépendant du diamètre extérieur de celui-ci. Les lames 25 seront maintenues en place autour du cylindre 10 par les manchettes de chauffage disposées dans les ouvertures 25A. D'autres moyens de positionnement et de fixation des lames 25 autour du cylindre peuvent aussi être prévus.

De par leur simplicité de conception, le procédé de refroidissement ainsi que le dispositif représenté par les lames de refroidissement 25 peuvent facilement s'adapter à tous les cylindres d'extrudeuses, permettant de modifier les extrudeuses existantes afin d'améliorer leurs performances ou d'être directement installés sur de nouvelles machines.

## Revendications

1. Procédé de refroidissement par air du cylindre (10) d'une extrudeuse (1), la longueur dudit cylindre comportant au moins une zone de chauffage/refroidissement,
caractérisé en ce que
pour chaque zone de chauffage/refroidissement, des moyens d'amenée d'air (20) injectent de l'air frais en au moins un point d'entrée à l'intérieur d'une enceinte (21) entourant ladite zone de chauffage/refroidissement, l'air étant ensuite dirigé afin de se répartir sur le pourtour du cylindre puis de s'écouler substantiellement longitudinalement le long de la dite zone pour être évacué en au moins un point de sortie (24) de ladite enceinte.

2. Procédé selon la revendication 1, caractérisé en ce que l'air de refroidissement est réparti selon deux directions opposées, s'écoulant substantiellement longitudinalement depuis un point d'entrée disposé à proximité du bas de l'enceinte, approximativement à mi-longueur de la zone de chauffage/refroidissement, vers deux points de sortie disposés à proximité du bas de l'enceinte, approximativement aux deux extrémités de ladite zone.

3. Procédé selon la revendication 1, caractérisé en ce que l'air de refroidissement s'écoule selon une seule direction depuis un point d'entrée disposé à proximité du bas de l'enceinte, à proximité d'une extrémité de la zone de chauffage/refroidissement, vers un point de sortie disposé à proximité du bas de l'enceinte, approximativement à l'autre extrémité de ladite zone.

4. Dispositif de refroidissement par air du cylindre (10) d'une extrudeuse (1), la longueur dudit cylindre comportant au moins une zone de chauffage/refroidissement, pour l'application du procédé selon la revendication 1,
caractérisé en ce qu'il comprend
au moins un moyen d'amenée d'air (20) relié à au moins un point d'entrée d'une enceinte (21) entourant le cylindre,
des moyens de guidage (21A) du flux d'air à l'intérieur de ladite enceinte, disposés de manière à répartir le flux d'air autour du cylindre puis à la faire s'écouler substantiellement longitudinalement le long de ladite zone,
des moyens d'échange thermique (22;25) disposés sur le pourtour du cylindre,
au moins un point de sortie d'air (24).

5. Dispositif selon la revendication 4, caractérisé en ce qu'il comprend un moyen d'amenée d'air (20) relié à un point d'entrée de l'enceinte, ledit point d'entrée étant disposé à proximité du bas de l'enceinte, approximativement à mi-longueur de la zone de chauffage/ refroidissement, et deux points de sortie d'air (24) disposés à proximité du bas de l'enceinte, approximativement aux deux extrémités de ladite zone, les moyens de guidage (21A) étant disposés de manière à ce que le flux d'air soit réparti en deux flux de directions opposées.

6. Dispositif selon la revendication 4, caractérisé en ce qu'il comprend un moyen d'amenée d'air (20) relié à un point d'entrée de l'enceinte, ledit point d'entrée étant disposé à proximité du bas de l'enceinte, à proximité d'une extrémité de la zone de chauffage/refroidissement, et un point de sortie d'air (24) disposé à proximité du bas de l'enceinte, à proximité de l'autre extrémité de ladite zone, les moyens de guidage (21A) étant disposés de manière à ce que le flux d'air s'établisse selon un seul flux.

7. Dispositif selon l'une des revendications 4 à 6, caractérisé en ce que les moyens d'échange thermique sont constitués d'une pluralité de lames de refroidissement (25) de forme substantiellement parallélipipèdique avec une épaisseur relativement faible, lesdites lames étant disposées côte à côte, radialement sur le pourtour d'une portion du cylindre (10), en contact avec ledit cylindre par une partie de contact (25C) formée sur l'épaisseur de ladite lame, un espace de guidage d'air de forme substantiellement triangulaire étant créé entre chaque lame.

8. Dispositif selon la revendication 7, caractérisé en ce que chaque zone de chauffage/ refroidissement comporte plus d'un groupe desdites pluralités de lames, lesdits groupes étant alignés selon la direction longitudinale du cylindre.

9. Dispositif selon l'une des revendications 7 ou 8, caractérisé en ce que chaque lame possède des moyens de placement et de fixation (25A,25B) d'une manchette de chauffage (30).

10. Dispositif selon l'une des revendications 7 à 9, caractérisé en ce que la partie de contact (25C) de chaque lame est conformée de manière à augmenter l'échange thermique entre le cylindre et ladite lame.

11. Extrudeuse (1) équipée d'au moins un dispositif selon l'une des revendications 4 à 10.

## Claims

1. Method of air-cooling a cylinder (10) of an extruder (1), the length of said cylinder having at least one heating/cooling zone,
characterised in that
for each heating/cooling zone, air-delivery means (20) inject the cool air at least one point of entry on the interior of an enclosure (21) surrounding said heating/cooling zone, the air being then directed so as to distribute itself over the periphery of the cylinder then to flow substantially longitudinally along said zone to be exhausted at at least one point of exit (24) from the said enclosure.

2. Method according to claim 1, characterised in that the cooling air is distributed in two opposite directions, flowing substantially longitudinally from a point of entry disposed near the bottom of the enclosure, approximately midway along the heating/cooling zone, toward two points of exit disposed near the bottom of the enclosure, approximately at the two ends of said zone.

3. Method according to claim 1, characterised in that the cooling air flows in a single direction from a point of entry disposed near the bottom of the enclosure, near one end of the heating/cooling zone, toward a point of exit disposed near the bottom of the enclosure, approximately at the other end of said zone.

4. Device for air-cooling a cylinder (10) of an extruder (1), the length of said cylinder having at least one heating/cooling zone, for application of the method according to claim 1,
characterised in that it comprises:
at least one air-delivery means (20) connected to at least one point of entry of an enclosure (21) surrounding the cylinder,
means of guiding (21A) the stream of air within said enclosure, disposed so as to distribute the stream of air around the cylinder then cause it to flow substantially longitudinally along said zone,
heat-exchange means (22; 25) disposed on the periphery of said cylinder,
at least one point of exit of air (24).

5. Device according to claim 4, characterised in that it comprises an air-delivery means (20) connected to a point of entry of the enclosure, said point of entry being disposed near the bottom of the enclosure, approximately midway along the heating/cooling zone, and two points of exit of air (24) disposed near the bottom of the enclosure, approximately at the two ends of said zone, the guide means (21A) being disposed in such a way that the stream of air is divided into two streams of opposite directions.

6. Device according to claim 4, characterised in that it comprises an air-delivery means (20) connected to a point of entry of the enclosure, said point of entry being disposed near the bottom of the enclosure, near one end of the heating/cooling zone, and a point of exit of air (24) disposed near the bottom of the enclosure, near the other end of said zone, the guide means (21A) being disposed in such a way that the flow of air establishes itself in a single stream.

7. Device according to one of the claims 4 to 6, characterised in that the heat exchange means are constituted by a plurality of relatively thin cooling fins (25) of substantially parallelepiped shape, said fins being disposed side by side and radially over the periphery of a portion of said cylinder (10), in contact with said cylinder by a contact part (25C) formed by the thickness of said fin, an air-guiding space of substantially triangular shape being created between each fin.

8. Device according to claim 7, characterised in that each heating/cooling zone comprises more than one group of said pluralities of fins, said groups being aligned according to the longitudinal direction of the cylinder.

9. Device according to one of the claims 7 or 8, characterised in that each fin has means (25A, 25B) for placement and fastening of a heating sleeve (30).

10. Device according to one of the claims 7 to 9, characterised in that the contact part (25C) of each fin is shaped so as to increase the heat exchange between the cylinder and said fin.

11. Extruder (1) equipped with at least one device according to one of the claims 4 to 10.

## Patentansprüche

1. Verfahren zur Kühlung des Zylinders (10) eines Extruders (1) mit Luft, wobei längs des Zylinders mindestens eine Heiz/Kühlzone angeordnet ist dadurch gekennzeichnet, dass für jede Heiz/Kühlzone Luftzuführmittel (20) frische Luft in mindestens eine Einlassstelle zum Inneren einer die besagte Heiz/Kühlzone umschliessenden Umhüllung (21) einblasen, dass die Luft dann so geleitet wird, dass sie sich über den Aussenumfang des Zylinders verteilt und im wesentlichen in Längsrichtung entlang des Zylinders strömt, um an mindestens einer Auslassstelle (24) der besagten Umhüllung abgezogen zu werden.

2. Verfahren nach Anspruch 1, dadurch gekennzeichnet, dass die Kühlluft in zwei entgegengesetzte Richtungen verteilt wird und im wesentlichen in Längsrichtung von einer in der Nähe der Unterseite der Umhüllung ungefähr auf halber Länge der Heiz/Kühlzone angeordneten Einlassstelle gegen zwei in der Nähe der Unterseite der Umhüllung ungefähr bei den beiden Enden der besagten Zone angeordnete Auslassstellen strömt.

3. Verfahren nach Anspruch 1, dadurch gekennzeichnet, dass die Kühlluft in einer einzigen Richtung von einer in der Nähe der Unterseite der Umhüllung in der Nähe eines Endes der Heiz/Kühlzone angeordneten Einlassstelle gegen eine in der Nähe der Unterseite der Umhüllung ungefähr am anderen Ende der besagten Zone angeordnete Auslassstelle strömt.

4. Vorrichtung zur Kühlung des Zylinders (10) eines Extruders (1) mit Luft, wobei längs des Zylinders mindestens eine Heiz/Kühlzone angeordnet ist zur Anwendung des Verfahrens nach Anspruch 1, dadurch gekennzeichnet, dass sie mindestens ein mit mindestens einer Einlassstelle einer den Zylinder umgebenden Umhüllung (21) verbundenes Luftzuführmittel (20), Führungsmittel (21A) für den Luftstrom im Inneren der besagten Umhüllung, die so angeordnet sind, dass sie den Luttstrom um den Zylinder verteilen und ihn dann im wesentlichen in Längsrichtung entlang der besagten Zone strömen lassen, auf dem Aussenumfang des Zylinders angeordnete Wärmetauschmittel (22; 25) und mindestens eine Auslassstelle (24) für die Luft enthält.

5. Vorrichtung nach Anspruch 4, dadurch gekennzeichnet, dass sie ein mit einer Einlassstelle der Umhüllung verbundenes Luftzuführmittel (20) enthält, welche Einlassstelle in der Nähe der Unterseite der Umhüllung ungefähr auf halber Länge der Heiz/Kühlzone angeordnet ist, dass sie zwei in der Nähe der Unterseite der Umhüllung ungefähr an den beiden Enden der besagten Zone angeordnete Auslassstellen (24) enthält und dass die Führungsmittel (21A) so angeordnet sind, dass der Luftstrom in zwei Ströme mit entgegengesetzten Richtungen verteilt wird.

6. Vorrichtung nach Anspruch 4, dadurch gekennzeichnet, dass sie ein mit einer Einlassstelle der Umhüllung verbundenes Luftzuführmittel (20) enthält, welche Einlassstelle in der Nähe der Unterseite der Umhüllung in der Nähe eines Endes der Heiz/Kühlzone angeordnet ist, dass sie eine in der Nähe der Unterseite der Umhüllung in der Nähe des anderen Endes der besagten Zone angeordnete Luft-Auslassstelle (24) enthält und dass die Führungsmittel (21A) so angeordnet sind, dass sich ein einziger Luftstrom bildet.

7. Vorrichtung nach einem der Ansprüche 4 bis 6, dadurch gekennzeichnet, dass die Wärmetauschmittel aus einer Mehrzahl von Kühlrippen (25) mit im wesentlichen Parallelepipedform mit relativ geringer Dicke gebildet sind, dass die besagten Rippen Seite an Seite radial auf dem Aussenumfang eines Bereichs des Zylinders angeordnet sind, wobei sie mit dem besagten Zylinder durch einen auf der Dicke der besagten Rippe gebildeten Kontaktbereich (25C) im Kontakt stehen, und dass zwischen jeder Rippe ein Luftführungsraum von im wesentlichen dreieckiger Form gebildet ist.

8. Vorrichtung nach Anspruch 7, dadurch gekennzeichnet, dass jede Heiz/Kühlzone mehr als eine Gruppe der besagten Mehrzahl von Rippen enthält, wobei die besagten Gruppen in Längsrichtung des Zylinders ausgerichtet sind.

9. Vorrichtung nach einem der Ansprüche 7 oder 8, dadurch gekennzeichnet, dass jede Rippe Mittel (25A, 25B) zum Aufnehmen und Befestigen einer Heizmanschette (30) besitzt.

10. Vorrichtung nach einem der Ansprüche 7 bis 9, dadurch gekennzeichnet, dass der Kontaktbereich (25C) jeder Rippe so gestaltet ist, dass der Wärmeaustausch zwischen dem Zylinder und der besagten Rippe erhöht ist.

11. Extruder (1) ausgestattet mit mindestens einer Vorrichtung nach einem der Ansprüche 4 bis 10.
